Europäisches Patentamt

(19) European Patent Office

Office européen des brevets

(11) Publication number : **0 351 105 B1**

(12) **EUROPEAN PATENT SPECIFICATION**

(45) Date of publication of patent specification :
25.11.92 Bulletin 92/48

(51) Int. Cl.⁵ : **C04B 28/26, E21F 15/00**

(21) Application number : **89306635.7**

(22) Date of filing : **29.06.89**

(54) **Backfilling in mines.**

(30) Priority : **14.07.88 ZA 885086**
**30.09.88 GB 8823017**

(43) Date of publication of application :
**17.01.90 Bulletin 90/03**

(45) Publication of the grant of the patent :
**25.11.92 Bulletin 92/48**

(84) Designated Contracting States :
**DE ES FR GB IT SE**

(56) References cited :
**DE-A- 3 622 568**
**GB-A- 2 058 037**

(56) References cited :
**US-A- 3 498 809**
**US-A- 3 672 173**
**US-A- 4 419 135**
**US-A- 4 470 463**

(73) Proprietor : **FOSROC INTERNATIONAL LIMITED**
**285 Long Acre**
**Nechells Birmingham B7 5JR (GB)**

(72) Inventor : **Smart, Roderick Macdonald**
**Kindeace Lodge Canonbury Terraces**
**Fortrose Ross-Shire Scotland IV10 84T (GB)**

(74) Representative : **Shaw, Laurence**
**George House George Road**
**Edgbaston Birmingham B15 1PG (GB)**

## Description

The invention relates to backfilling in mines, tunnelling or the like, i.e. the practice of placing a fill of material in an underground void. A backfill material may be used to replace the ore or minerals extracted for example in "cut and fill" or "bulk" mining, and in wide void/cavity filling. The purpose of backfilling may be to provide support for the surrounding roof and walls, to provide a working platform or to provide a means of waste disposal.

The fill material comprises materials which are substantially inert to reaction with binders or water, e.g. mine tailings and other forms of waste, crushed rockfill, aggregate, sands and mixtures of these; optionally with hydraulically setting binder additives such as cement, slag, pulverised fuel ash and the like. The fill is usually transported to the void for placement as a slurry or paste of solids in water. The water content is usually 15 to 55%, preferably 25 to 40% by weight. It is necessary for the placed slurry to dewater until the placed material has consolidated and if required, attained predetermined properties so that working in adjacent areas can take place. The dewatering takes place by drainage and decantation systems. It is sometimes important that the finally placed fill resist vibration such as that caused by blasting or a seismic event. In other cases, there is need to support the weight of machinery. The run-off of excess water is inconvenient to the operation of the mine and substantial costs can be incurred in pumping the water away from the areas in which it accumulates. The run-off water may contain significant quantities of very fine particles which can include a significant proportion of the binder. This can settle in drains, gulleys etc. which requires silt clearance from time to time. The water may also cause problems of pollution. The backfill material may be slow to dewater in which case sudden vibration, e.g. rock burst or blasting can cause mass flow with sudden release and flooding. The slimes can cause excess wear of equipment, unsafe working conditions and a wet environment. For safety reasons therefore it may be necessary to wait for an inconvenient length of time before mining can proceed adjacent the placed backfill. In addition, there is a need to wait for drainage to occur during filling of a void to prevent excessive hydrostatic pressure being generated. This is time consuming and limits the rate of backfilling. Barricades have to be built strong enough to resist the hydrostatic pressures generated. Also, the material may be slow to set and harden which limits the progress of mining. The water run-off causes a reduction in the volume of the backfill which is revealed by shrinkage. The resulting void may require to be topped up and this slows down mining progress. Unclassified tailings cannot be used as the fines therein interfere with water drainage. Wet undrained slimes can lead to collapse of the placed fill when exposed. Flocculants at extra cost must often be added to facilitate drainage.

US-A-4419135 discloses that a water soluble polyethylene oxide thickening agent may be added in a high proportion to a cementitious backfill material to allow the backfill mortar composition to flow over long distances before setting. After placement about half of the free water is removed.

The invention is based on the realisation that by suitably formulating the slurry it is possible to cause the placed slurry to set and attain the desired properties while trapping or binding un the water therein, a feature which the mining engineer has hitherto considered to be impossible. The invention is based on the further realisation that a gelling agent can be used in the binding of particulate material associated with a high proportion of water to set to a load bearing condition.

It is one object of the invention to provide a method of filling a cavity or void by placing therein a backfill slurry in which method the release of water is significantly reduced, so reducing the problems indicated.

In one aspect the invention provides a method of forming an infill in an underground void, comprising forming a backfill slurry of water, the slurry comprising
- about 15% to 55% by weight of water
- a filler which is substantially inert to water, e.g. mine tailings, rockfill, aggregate, coal, sand or the like,
- about 0.5% to about 15% by weight of a binder, e.g. cement, lime, pozzolanic material or the like
transporting the slurry to a void, placing the slurry and allowing or causing the material to set <u>characterised in that</u> about 0.3% to about 0.8% by weight relative to the weight of the slurry of a gelling agent is added to the slurry while or just before the slurry is placed thereby to cause the slurry to form an infill containing substantially all the water of the slurry.

The gelling agent may be a silicate such as sodium silicate. The sodium silicate may have a weight ratio of $SiO_2:Na_2O$ of from about 1 to about 3.85, preferably 2.0 to 3.3. The pH value ranges from about 13.2 to about 10.9 and the solids content from 50 to 28%. A silica sol may be used. The gelling agent may also be a sulphate such as aluminium sulphate or magnesium sulphate. Organic gelling agents may also be used.

The proportion of the gelling agent in the slurry may vary according to application and ranges from about 0.3% to about 8.0% by weight. The proportion of gelling agent is related to the prevention of the escape of water. In addition, the gelling agent ensures that the backfill material sets homogeneously and preferably causes an increase in the rate of development of early strength. While higher concentrations of gelling agent can be used this is not encouraged for reasons of cost and because the strength attained can fall off at high loadings. Suitable values are in the range of from about 0.5% to about 2.0%. The gelling agent may be introduced into the slurry while or just before the slurry is being discharged into the void or cavity from a supply pipeline; the period should be sufficient to ensure adequate mixing and less than that at which overmixing or premature setting occurs. Usually the period will be a few seconds or minutes. The gelling agent may be mixed with the slurry in any appropriate way. For example use may be made of a static mixing head or reliance upon turbulent flow.

The slurry may contain a wide range of settable binder additives in the proportion of about 0.5 to about 15% by weight of the slurry. Ordinary Portland cement may be present in a proportion by weight of from 0.5% to 15% (or more) and preferably is in the range of from 2% to 10%, relative to the total weight of the slurry and dependant on the strength required. Other cements may be used. Lime may be present in a proportion by weight of from 0.01% to 1.0% and preferably is in the range of from 0.05% to 0.6%. The lime is not an essential ingredient of the composition but its omission significantly increases the gelling time of the composition and affects the rate of strength development. The lime may be provided as a result of the reaction of the cement and water. Other materials with similar reactivity such as sodium aluminate may be used. Blast furnace slag or like pozzolanic material may be present in a ratio by weight of from 0.5% to 15% and preferably is present in a range of from 2% to 10%. Activators for the pozzolanic material may be required. Additives such as accelerators, polymeric materials, surfactants, plasticisers, lubricants and the like may be present.

The invention is of especial value in relation to backfills formed of fines which have little or poor strength such as tailings; coal slurries; ores and waste or the like especially quarry/dredged sands. The nature of the tailings will vary according to the mine. (In some cases it is more economic to transport mined ores to a remote plant for processing and not economic to return the tailings to the mine; sand and aggregate or the like may be used instead of the tailings). An analysis of mine tailings from two mines is as follows:

| quartz | 39 | 34 |
| phlogopite | 21 | 7 |
| albite | 16 | 34 |
| tremolite | 10 | 7 |
| phyrrhotite | 7 | 0 |
| kaolinite | 6 | 8 |
| chlorite | 1 | 1 |
| magnetite | 0 | 6 |
| median particle size | 29.2 micron | 104 micron |
| specific gravity (20°C) | 2.4 | 2.4 |

The weight ratio of the substantially inert filler to the binder preferably ranges from 7.04 : 1 to 30:1.

Irrespective of the nature of the tailings, or like placed material, the set material is homogeneous, hard and durable. Despite the presence of contained water, the set material is a non-liquifacient mass, i.e. it will not release water or liquify under vibration.

In order that the invention may be well understood it will now be described with reference to the following examples in which parts are by weight unless otherwise indicated. The sodium silicate used had a weight ratio of $SiO_2:Na_2O$ of 3.3:1. The weight of the tailings is dry weight. The abbreviation OPC stands for Ordinary Portland Cement and BFS for ground granulated blast furnace slag.

Example I

Four slurries were made up as shown in Table 1 and placed in backfill bags. The rate of run-off water from the slurries and the compressive strength of the set material were determined. Composition 1 was a slurry of water and slimes only. Most of the water escaped from the backfill bag during an initial two hours and the run-off continued over at least a seven day period. The compressive strength was very low. Cementitious ingredients were present in composition 2 as indicated. Higher strength is imparted to the set backfill mass but there is negligible effect on the water run-off level. Composition 3 contains an additive comprising a blend of OPC,BFS and lime added to the backfill slurry in the proportions detailed, totalling 4.33% by weight. 0.85% by weight of sodium silicate solution was added to the backfill slurry just before the slurry is introduced into a backfill bag. The slurry and the sodium silicate solution are mixed thoroughly using a suitable static mixing head attached to a discharge end of a backfill delivery pipe. The sodium silicate rapidly gelled and the water of the backfill slurry was incorporated in the set fill so that the run-off was reduced to approximately 4%. The OPC,BFS and the lime allow the set backfill mass to achieve a high degree of compressive strength, (in the order of between 0.50 and 1.0 MPa). Composition 4 contained increased levels of additions of the sodium silicate, OPC, the slag and the lime. The level of run-off is further reduced and the compressive strength is increased.

Example II

Four slurries were made up as indicated in Table 2.

Slurries 1 and 3 did not contain any gelling agent and were made up at 10:1 and 30:1 tailings:binder ratios respectively. The 10:1 ratio is frequently used in vertical retreat mining for the plug fill and the 30:1 ratio for the bulk fill. Slurries 2 and 4 contained the gelling agent and were made up at 7.5:1 and 25:1 tailings:binder ratio respectively. Higher binder contents were used than in the control mixes to give similar ultimate strengths with the higher retained water content. All slurries were made up at 70% bulk density.

Comparison of slurries 1 and 2 shows that water retention has been increased from 55 to 90% of the total water initially present and early strengths have been markedly increased, for example from O to 0.07MPa at 12 hrs and from 0.103MPa to 0.276 MPa at 3 days. Similar comparison of slurries 3 and 4 shows water retention increased from 71 to 92%, and the 12 hr strength from 0 to 0.02MPa and 3 day strength from 0.04 to 0.09MPa.

The higher water retention will increase yield, eliminate or reduce the need for drainage and drainage towers, enable unclassified tailings to be used and eliminate or reduce the need to handle the run-off water. The faster rate of strength development will allow faster filling of voids and more rapid mining of adjacent ore bodies.

Slurries 2 and 4 were used to fill a stope about 23m high and 12m x 12m in area in a North American nickel mine. Slurry 2 was used as the plug fill in the bottom of the stope. Surprisingly better results were found in the field than in the laboratory. Negligible water run-off occurred and the slurry could be walked on 1 hour after placement.

Slurry 4 was used as the bulk fill and again gave negligible water run-off and rapid strength development. The filled stope was unaffected when the adjacent panel was mined one month later.

Example III

Mixes were made up using different compositions as set out in Table III and the bleed and compressive strength were determined. These mixes show that by suitable adjustment of the settable binder materials and auxilliary agents and selection of different gellants, classified tailings can be backfilled with predetermined rate of bleed and development of compressive strength.

The result of composition 1 shows that in the absence of a gellant there is a high level of bleed and the set material has poor strength. Composition 2 contains BFS but neither cement nor lime but a gellant; while the bleed is reduced the strength of the set material is reduced. The addition of lime in composition 3 instead of the slag reduces the bleed but does not improve the strength. Composition 4 contains cement and a gellant; the bleed is reduced and the strength is improved. Composition 5 contains lime, cement, slag and accelerators and the bleed is reduced to 1% and the strength is 0.34 MPa. Composition 6 shows that the sodium silicate can be replaced by the silica sol; composition 7 shows that the sodium silicate can be replaced by aluminium sulphate. Composition 8 shows that a combination of OPC, BFS and lime improves the set strength. Composition 9 shows that the tailings can be replaced by sand. Composition 10 and 11 show the effect of increasing the content of sodium silicate gelling agent; increasing the content to 8% reduces the bleed and increases the set strength whereas increasing the level to 16% reduces the bleed but also decreases the set strength. For this reason and because of cost it is preferred to keep the level of gellant to a low level, say to about 2% to 3%. Composition 12 shows that increasing the content of slag and adding beta anhydrite increases the set strength.

The results of these Examples show that tailings and like waste particulate material when in the form of a slurry having a water content of about 30% may be placed and caused to settle into solid form with controlled loss of water to the extent that the mining engineer can backfill a void to a predetermined strength without having to wait for the water to bleed away and otherwise carry out any post placement treatment. Mining operations are speeded up as a result and the problems associated with bleed are avoided.

EP 0 351 105 B1

TABLE 1

|  | 1 | 2 | 3 | 4 |
|---|---|---|---|---|
| slimes | 71.43 | 67.45 | 67.72 | 64.39 |
| water | 28.57 | 26.98 | 27.10 | 25.76 |
| BFS | – | 5.06 | 2.71 | 5.15 |
| $Ca(OH)_2$ | – | 0.51 | 0.27 | 0.52 |
| OPC | – | – | 1.35 | 2.58 |
| sodium silicate | – | – | 0.85 | 1.60 |
|  | 100.00 | 100.00 | 100.00 | 100.00 |
| total % additives | 0 | 5.57 | 5.18 | 9.85 |
| slurry density | 1.72 | 1.74 | 1.74 | 1.75 |
| run-off % after: |  |  |  |  |
| 2 hours | 70.1 | 66.3 | 4.2 | 2.2 |
| 24 hours | 8.9 | 8.5 | 0.4 | 0.2 |
| 7 days | 1.3 | 0 | 0 | 0 |
| total bleed | 80.3 | 74.8 | 4.6 | 2.4 |
| compressive strength (MPa) (28 day) | 0.21 | 1.91 | 0.74 | 0.98 |

Table 2

| Composition | 1 | 2 | 3 | 4 |
|---|---|---|---|---|
| **Slurry** | | | | |
| classified mine tailings | 63.62 | 61.8 | 67.76 | 67.31 |
| water | 30 | 30 | 30 | 30 |
| **Binder** | | | | |
| slag | 4.2 | 5.4 | 1.4 | 1.7 |
| $Ca(OH)_2$ | 0.08 | 0.10 | 0.14 | 0.16 |
| OPC | 2.1 | 2.7 | 0.7 | 0.85 |
| sodium silicate | 0 | 1.3 | 0 | 1.3 |
| tailings: binder ratio | 10:1 | 7.5:1 | 30:1 | 25:1 |
| % of total water retained after 24 hr. drainage i.e. bleed | 55 45 | 90 10 | 71 29 | 92 08 |
| density at 24 hr. after drainage (Kg/m3) | 2170 | 2020 | 2090 | 2030 |
| Compressive strength (MPa) | | | | |
| 12 hour     - | 0 | 0.06 | 0 | 0.03 |
| 24 hour     - | 0.02 | 0.16 | 0 | 0.04 |
| 3 day     - | 0.01 | 0.27 | 0.04 | 0.09 |
| 7 day     - | 0.25 | 0.62 | 0.06 | 0.16 |
| 28 day     - | 1.03 | 1.15 | 0.24 | 0.33 |

TABLE 3

| COMPOSITION | | 1 | 2 | 3 | 4 | 5 | 6 |
|---|---|---|---|---|---|---|---|
| Slurry | tailings | 58.1 | 53.0 | 53.0 | 53.1 | 58.1 | 63.2 |
| | $Ca(OH)_2$ | 0.25 | - | 8.7 | - | 0.25 | 0.13 |
| | CaO | 0.0 | - | - | - | - | - |
| | OPC | 1.25 | - | - | 8.7 | 1.25 | 1.0 |
| | BFS | 2.5 | 8.7 | - | - | 2.5 | 2.85 |
| | beta $CaSO_4$ | - | - | - | - | - | - |
| | bentonite clay | - | - | - | - | - | - |
| | sodium aluminate | 0.2 | - | - | - | 0.2 | 0.11 |
| | sodium carbonate | - | - | - | - | - | 0.6 |
| | calcium carbonate | - | - | - | - | - | 0.03 |
| | water | 37.7 | 38.3 | 38.3 | 38.3 | 37.7 | 31.6 |
| Gellant | sodium silicate | - | 1.3 | 1.3 | 1.3 | 1.0 | - |
| | silica sol | - | - | - | - | - | 1.0 |
| | aluminium sulphate | - | - | - | - | - | - |
| Results | Bleed (%) | 20 | 11 | 6 | 5 | 1 | 3 |
| | 7 day compressive strength (MPa) | 0 | 0 | - | 0.34 | 0.34 | 0.27 |

EP 0 351 105 B1

TABLE 3

| | COMPOSITION | 7 | 8 | 9 | 10 | 11 | 12 |
|---|---|---|---|---|---|---|---|
| Slurry | tailings | 61.3 | 61.6 | 63.9 * | 61.6 | 61.6 | 61.8 |
| | $Ca(OH)_2$ | -- | 0.5 | 0.16 | - | 0.5 | 0.35 |
| | CaO | - | -- | - | 0.5 | - | - |
| | OPC | 8.2 | 2.5 | 1.3 | 2.5 | 2.5 | - |
| | BFS | -- | 5.0 | 2.5 | 5.0 | 5.0 | 7.2 |
| | beta $CaSO_4$ | - | -- | 0.5 | - | - | 0.65 |
| | bentonite clay | 0.5 | -- | - | -- | - | - |
| | sodium aluminate | - | 0.4 | 0.4 | - | 0.4 | - |
| | sodium carbonate | - | - | 0.2 ** | - | - | - |
| | calcium carbonate | - | - | - | - | -- | - |
| | water | 30.0 | 30.0 | 32.0 | 30.0 | 30.0 | 30.0 |
| Gellant | sodium silicate | - | 1.0 | 1.0 | 8.0 | 16.0 | 1.0 |
| | silica sol | - | - | - | -- | -- | - |
| | aluminium sulphate | 3.2 | -- | - | - | -- | -- |
| Results | Bleed (%) | 0 | 1 | 0 | 0.5 | 0 | 1 |
| | 7 day compressive strength (MPa) | 0.9 | 0.8 | 0.5 | 4.5 | 0.7 | 1.4 |

* sand   ** $Al_2(SO_4)_3 . 14H_2O$

EP 0 351 105 B1

## Claims

1. A method of forming an infill in an underground void, comprising : forming a nackfill slurry comprising
   - about 15% to about 55% by weight of water
   - a filler which is substantially inert to the water, e.g. mine tailings, rockfill, aggregate, coal, sand or the like
   - about 0.5% to about 15% by weight of a binder, e.g. cement, lime, pozzolanic material or the like, transporting the slurry to the void, placing the slurry and allowing or causing the material to set <u>characterised in that</u> about 0.3% to about 8% by weight relative to the weight of the slurry of a gelling agent is added to the slurry while or just before the slurry is placed, thereby to cause the slurry to form an infill containing substantially all the water of the slurry.

2. A method according to Claim 1 <u>characterised in that</u> the gelling agent is present in a concentration of about 0.5% to 2% by weight of the slurry.

3. A method according to Claim 1 or 2 <u>characterised in that</u> the gelling agent is inorganic.

4. A method according to Claim 3 <u>characterised in that</u> the gelling agent is sodium silicate or silica sol.

5. A method according to Claim 3 <u>characterised in that</u> the gelling agent is aluminium sulphate.

6. A method according to any preceding Claim <u>characterised in that</u> the weight ratio of the substantially inert filler to the binder is from 7.04:1 to 30:1.

## Patentansprüche

1. Verfahren zum Formen einer Füllung für einen unterirdischen Hohlraum, bestehend aus: Formen eines Füllschlammes, bestehend aus:
   - ca. 15 bis 55 Gew. % Wasser
   - einem Füllstoff, der sich im wesentlichen neutral zu Wasser verhält, z.B. Abgänge, Versatz, Zuschlagstoffe, Kohle, Sand oder dergl.,
   - ca. 0,5 bis 15 Gew. % eines Bindemittels wie Zement, Kalk, Puzzolanmaterial oder dergl., Transport des Schlammes zum Hohlraum, Einbringen des Schlammes und Ermöglichen oder Verursachen von Härten des Materials, <u>dadurch gekennzeichnet, daß</u> etwa 0,3 bis 8 Gew. % im Vergleich zum Schlammgewicht eines Geliermittels dem Schlamm bei oder direkt vor Einbringen des Schlammes zugegeben werden, so daß der Schlamm eine Füllung bilden kann, die im wesentlichen das ganze Wasser im Schlamm enthält.

2. Verfahren nach Anspruch 1, <u>dadurch gekennzeichnet, daß</u> das Geliermittel zur Zeit eine Konzentration von etwa 0,5 bis 2 Gew. % des Schlammes aufweist.

3. Verfahren nach Anspruch 1 oder 2, <u>dadurch gekennzeichnet, daß</u> das Geliermittel anorganisch ist.

4. Verfahren nach Anspruch 3, <u>dadurch gekennzeichnet, daß</u> das Geliermittel Natriumsilikat oder Siliziumsol ist.

5. Verfahren nach Anspruch 3, <u>dadurch gekennzeichnet, daß</u> das Geliermittel ein Aluminiumsulphat ist.

6. Verfahren nach einem der vorstehenden Ansprüche, <u>dadurch gekennzeichnet, daß</u> das Gewichtsverhältnis im wesentlichen neutraler Füllstoffe zum Bindemittel 7,04:1 bis 30:1 beträgt.

## Revendications

1. Méthode de mise en place d'un matériau de remplissage dans un vide sous-terrain, comprenant : la formation d'un coulis de remblai composé de :
   - 15 % environ à 55 % environ par poids, d'eau
   - un matériau de remplissage virtuellement inerte dans l'eau, par exemple des charrées de mine, des moellons de blocage, des granulats, du charbon, du sable ou matières analogues.
- 0,5 % environ à 15 % environ par poids, d'un agent de liaison, par exemple du ciment, de la chaux, une matière pouzzonalique ou similaire,

méthode par laquelle le coulis est transporté vers le vide et est placé de manière à ce qu'il permette au matériau de se solidifier ou l'amène à se solidifier, <u>caractérisée en ce que</u> de 0,3 % environ à 8 % environ par poids, proportionnellement au poids du coulis, d'un agent gélifiant, sont ajoutés au coulis pendant ou juste avant que le coulis soit mis en place, le coulis formant ainsi un matériau de remplissage contenant la plus grande partie de l'eau du coulis.

2. Méthode qui, selon la revendication 1, est <u>caractérisée en ce que</u> l'agent gélifiant est présent sous forme de concentration à raison de 0,5 % à 2 % environ par poids de coulis.

3. Méthode qui, selon les revendications 1 ou 2, est <u>caractérisée en ce que</u> l'agent gélifiant est inorganique.

4. Méthode qui, selon la revendication 3, <u>est caractérisée en ce que</u> l'agent gélifiant est du silicate de sodium ou du silice colloïdal.

5. Méthode qui, selon la revendication 3, <u>est caractérisée en ce que</u> l'agent gélifiant est un sulfate d'aluminium.

6. Méthode qui, selon toute revendication antérieure, <u>est caractérisée en ce que</u> le rapport de poids entre le remblai virtuellement inerte et l'agent de liaison est de 7.04:1 à 30:1.